# EUROPÄISCHE PATENTSCHRIFT

(11) **EP 4 154 721 B1**
(45) Veröffentlichungstag und Bekanntmachung des Hinweises auf die Patenterteilung: **11.12.2024**
(21) Anmeldenummer: 22197471.0
(22) Anmeldetag: 23.09.2022
(51) Int. Cl.: B65G 47/84, A22C 11/00, B65G 15/14, B07C 5/00, B65G 37/00

(54) **VORRICHTUNG UND VERFAHREN ZUM TRANSPORTIEREN UND AUSSCHLEUSEN VON GETRENNTEN LEBENSMITTELPORTIONEN**
DEVICE AND METHOD FOR TRANSPORTING AND REMOVING SEPARATED PORTIONS OF FOOD
DISPOSITIF ET PROCÉDÉ DE TRANSPORT ET D'ÉVACUATION DE PORTIONS SÉPARÉES D'ALIMENTS

(30) Priorität: 24.09.2021 DE 102021124801
(43) Veröffentlichungstag der Anmeldung: 29.03.2023
(73) Patentinhaber: VEMAG Maschinenbau GmbH, 27283 Verden/Aller (DE)
(72) Erfinder: Flammann, Uwe, 27308 Kirchlinteln (DE); Stubbe, Simon, 27313 Dörverden (DE); Wagner, Harald, 27283 Verden (DE); Blume, Gaylord, 27299 Langwedel (DE)
(74) Vertreter: Eisenführ Speiser

(56) Entgegenhaltungen:
- EP-A1- 3 281 529
- CN-A- 110 482 121
- DE-A1- 102008 012 783
- DE-A1- 3 731 051
- DE-A1- 4 318 301

## Beschreibung

Die Erfindung betrifft eine Ausschleus-Vorrichtung für Lebensmittelportionen, insbesondere Würstchen, mit zwei beabstandet zueinander angeordneten, mittels mindestens eines Antriebs antreibbaren umlaufenden Transportbändern, die ein Bandpaar bilden und einen Transportbereich aufweisen, welcher im Betrieb in eine Transportrichtung bewegt wird, und einen Rücklaufbereich, wobei eine Lebensmittelportion im Transportbereich zwischen den beiden Transportbändern in einer Transportstellung in Eingriff von diesen ist und in Transportrichtung transportiert werden kann. Die Erfindung betrifft ferner eine Transport-Vorrichtung zum Transportieren von Lebensmittelportionen und ein System zur Verarbeitung von pastöser Lebensmittelmasse.

Die Erfindung betrifft ferner ein Verfahren zum Ausschleusen von Würstchen, bei dem sich die Würstchen im Eingriff von parallel verlaufenden Transportbändern befinden, sodass die Würstchen in definierter Position in eine bestimmte Transportrichtung transportiert werden können.

Für die industrielle Herstellung von Lebensmittelportionen aus pastöser Lebensmittelmasse, beispielsweise Würstchen, werden sogenannte Würstchenlinien genutzt, in denen verschiedene Anlagen wie Füllmaschinen, Portioniermaschinen, Abdrehgeräte/-maschinen und/oder Trenneinrichtungen aufeinander abgestimmt in einem System zusammengefasst werden. Für den Transport der Portionen entlang der oder zwischen den verschiedenen Anlagen werden die Lebensmittelportionen auf Transportbändern abgelegt oder zwischen parallel laufenden Bändern oder Riemen in Eingriff von diesen gebracht.

Nach der Herstellung der Lebensmittelportionen erfolgt üblicherweise deren Weiterverarbeitung oder Verpackung mittels Verpackungsmaschinen. Vor dem Verpacken ist es dabei notwendig, ungeeignete Portionen, beispielsweise geplatzte Würstchen, die zuvor detektiert wurden, aus dem Prozess auszuschleusen, um so ein Verpacken dieser Portionen zu verhindern (vgl. Dokument DE 37 31 051 A1).

Unter dem nachfolgend verwendeten Begriff Würstchen sollen sämtliche Lebensmittelportionen aus pastöser Lebensmittelmasse verstanden werden, die vorzugsweise innerhalb einer Hülle gehalten wird. Die Hülle besteht aus Natur-, Collagen- oder Cellulosedarm oder ist eine (koextrudierte) Alginathülle.

Im Hinblick auf das Ausschleusen von Würstchen ist es von Vorteil, wenn dieser Vorgang möglichst während des Transports der Würstchen zwischen den einzelnen Verarbeitungsstationen oder Anlagen eines komplexeren Systems und in einem automatischen Prozess erfolgt, durch den es zu keinerlei zeitlichen Verzögerungen beim Transport der Würstchen kommt. Hierbei kann es gewünscht sein, dass die ausgeschleusten Würstchen nach dem Ausschleusungsvorgang in eine Kiste fallen und somit leicht aus der Produktionsanlage entfernt werden können. Um eine derartige Ausschleusung zu erreichen, müssen die Würstchen, im Fall des Transports der Würstchen auf/mit einem Transportband, vom Transportband entfernt werden.

Bei Transportbändern mit aufliegenden Würstchen ist die Lage der Würstchen oftmals undefiniert. Dennoch sind bereits Lösungen zum Ausschleusen der Würstchen konzipiert worden, beispielsweise das mechanische Einfahren von Führungselementen in den Transportraum und eine hiermit bewirkte Umleitung auszusortierender Würstchen. Dabei sind mitunter komplexe mechanische Konstruktionen notwendig. Im Fall des Transports der Würstchen im Eingriff von Transportbändern werden diese in definierter Position und mit einem definierten Abstand transportiert. Letzterer kann dabei durch Riemenübersetzung nach Bedarf eingestellt werden. Eine Einklemmung von Würstchen macht dabei im Fall eines horizontalen Eingriffs ein unterhalb der Würstchen laufendes Transportband obsolet. Hierdurch ist ein Freiraum zum Herausfallen der Würstchen unterhalb der Transportbänder vorhanden. Vergleichbares gilt bei einem senkrechten Eingriff von Transportbändern, bei dem die Bereiche seitlich der Transportbänder freigelassen und die Würstchen durch entsprechende Systemkomponenten aus dem Eingriff der Transportbänder gelöst werden können.

Aufgabe der vorliegenden Erfindung ist es, eine verbesserte Ausschleus-Vorrichtung für das Ausschleusen von Würstchen oder anderen Lebensmittelportionen bereitzustellen. Weiterhin ist es die Aufgabe der Erfindung, eine verbesserte Transport-Vorrichtung für Würstchen, ein verbessertes System zur Verarbeitung pastöser Lebensmittelmasse sowie ein verbessertes Verfahren zum Ausschleusen von Würstchen bereitzustellen.

Die Erfindung löst die Aufgabe in einem ersten Aspekt dadurch, dass die Ausschleus-Vorrichtung mindestens eine Verstelleinrichtung zum Ausschleusen einer Lebensmittelportion in einem Ausschleusbereich aufweist, die so ausgebildet ist, dass der Abstand der Transportbänder voneinander im Transportbereich mindestens partiell so variiert werden kann, dass (mindestens) eine Lebensmittelportion in der Transportstellung in Eingriff der Transportbänder ist und der Abstand in einer Ausschleusstellung so vergrößert ist, dass eine Lebensmittelportion so außer Eingriff von den Transportbändern kommt, dass sie ausgeschleust werden kann.

Erfindungsgemäß ist die Vorrichtung so ausgebildet, dass der Abstand der Transportbänder wenigstens partiell, also lokal oder abschnittsweise oder auch vollständig variiert werden kann, um einen Eingriff zwischen der Lebensmittelportion und den Transportbändern herzustellen oder zu unterbrechen. Ist der Eingriff vorhanden, wird die Lebensmittelportion transportiert, wird der Eingriff unterbrochen, wird die Lebensmittelportionen nicht mehr gehalten und kann ausgeschleust werden. Hierbei kann die Schwerkraft eingesetzt werden, sodass die Lebensmittelportion aufgrund dieser herunterfällt. Alternativ sind auch andere Hilfsmittel möglich, um das Ausschleusen zu unterstützen. Durch das Wegfallen der Eingriffwirkung bei vergrößertem Abstand der Transportbänder fallen also beispielsweise die Würstchen hinunter und können beispielsweise in einem Sammelbehälter aufgefangen werden. Die Ausschleusung erfolgt dabei vorzugsweise ohne Verzögerung der Umlaufgeschwindigkeit der Bänder und der Transportgeschwindigkeit der Würstchen in einem automatischen Prozess. Erfindungsgemäß kann die Ausschleus-Vorrichtung, insbesondere deren Transportbänder so ausgebildet sein, dass die Ausschleusung im vorderen Bereich, wo die Würstchen zugeführt werden, in einem hinteren Bereich, wo die Würstchen wieder abgegeben werden sollen oder in einem mittleren Bereich erfolgt. Vorzugsweise werden die Würstchen in einem kontinuierlichen Prozess transportiert und verarbeitet.

Gemäß einer Weiterbildung der Erfindung weist die Ausschleus-Vorrichtung mindestens eine Verstelleinrichtung auf, die eine Pneumatikeinheit ist oder aufweist, wodurch mit einfachen technischen Mitteln und in der Regel in Betrieben vorhandener Druckluft die Ausschleus-Vorrichtung erfindungsgemäß betätigt werden kann. Gemäß einer weiteren Weiterbildung der Erfindung weist jede Pneumatikeinheit einen Pneumatikzylinder als Antrieb oder Betätigungsorgan auf.

Gemäß einer Weiterbildung der Erfindung ist eine Pneumatikeinheit, besonders bevorzugt jede Pneumatikeinheit mit einem pneumatischen Zylinder, mindestens einem Transportband zugeordnet und dazu eingerichtet, den Abstand des Transportbands im Transportbereich mindestens abschnittsweise von dem gegenüberliegenden Transportband zu vergrößern bzw. zu verkleinern. Nach Entstehung eines Ausschleussignals fährt der pneumatische Zylinder ein, wodurch der Riemenverlauf und der Abstand der Transportbänder lokal verändert werden, sodass die Würstchen außer Eingriff der Transportbänder gelangen.

Gemäß der Erfindung ist die Ausschleus-Vorrichtung mit einer Steuerung verbunden ist, welche mit einer Sensoreinrichtung zur Detektion eines Merkmals der Lebensmittelportion, insbesondere ein Formmerkmal, verbunden ist, wobei die Steuerung ein Signal bereitstellt, um die Verstelleinrichtung(en) der Ausschleus-Vorrichtung zu steuern. Die Sensoreinrichtung ermöglicht somit ein automatisiertes oder autonomes Ausschleusen von nicht für die Weiterverarbeitung geeigneter Würstchen. Die Sensoreinrichtung ist dabei mittels elektrischer Leitungen oder Funkverbindung mit der Steuerung gekoppelt, sodass Signale zuverlässig an die Steuerung übertragen werden können. Die Steuerung dient zum Steuern der Ausschleus-Vorrichtung und ist so ausgebildet, dass die Verstelleinrichtung(en), insbesondere dessen bzw. deren Antriebe angesteuert werden können, um eine Betätigung auszulösen zum Ausschleusen. Die Steuerung kann dabei alternativ eine separate Steuerung nur für die Ausschleus-Vorrichtung sein oder die Steuerung beispielsweise einer Füllmaschine oder die Steuerung einer weiteren Lebensmittel-Behandlungseinrichtung sein, beispielsweise einer Abdreheinrichtung, einem Crimper, einer Trenneinrichtung zum Herstellen von separaten Würstchen oder Ausrichtvorrichtung zum Ausrichten von Würstchen. Verschiedene Sensoreinrichtungen können erfindungsgemäß zum Einsatz kommen und sind an sich bereits aus dem Stand der Technik bekannt, um bestimmte Merkmale oder Fehler von Würstchen erkennen zu können. Auch können mehrere Sensoreinrichtungen oder mehrere Sensoren zum Einsatz kommen, um Merkmale der Würstchen, insbesondere Mängel der Würstchen erkennen zu können und Signale an die Steuerung bereitstellen. Beispielsweise kann eine Sensoreinrichtung als Lichtsensor, als Infrarot-Lichtsensor oder als bildgebender Sensor ausgebildet sein.

Gemäß einer Weiterbildung der Erfindung weist die Ausschleus-Vorrichtung im Ausschleusbereich zusätzlich eine Unterstützungseinrichtung, vorzugsweise eine Luftblasdüse oder eine mechanische Betätigungseinrichtung, auf, die so angeordnet und ausgebildet ist, dass eine zusätzliche, die Ausschleusung unterstützende Kraft auf die Lebensmittelportion aufgebracht werden kann. Die Unterstützungseinrichtung dient dazu, die Ausschleusung zu unterstützen, ohne die Transportgeschwindigkeit der Würstchen zu reduzieren. So kann insbesondere eine Luftblasdüse oberhalb von dem Transportweg der Lebensmittelportionen angeordnet sein und durch einen Luftstrom eine vertikal nach unten gerichtete Kraft auf die Lebensmittelportion aufgebracht werden, die vorzugsweise zusammen mit der Gravitationskraft wirkt. Alternativ ist es erfindungsgemäß aber auch möglich, mittels einer Unterstützungseinrichtung eine Kraft auf die Lebensmittelportion zur Unterstützung der Ausschleusen aufzubringen, die in eine andere Richtung, beispielsweise auch horizontal gerichtet ist.

Die Erfindung löst die Aufgabe in einem weiteren Aspekt mit einer Transport-Vorrichtung, die eine Ausschleus-Vorrichtung nach einem der Ansprüche 1 bis 5 sowie mindestens ein weiteres Bandpaar aufweist, das mittels eines Getriebes (43), vorzugsweise eines Riemengetriebes, so mit dem Bandpaar der Ausschleus-Vorrichtung gekoppelt ist, dass sich bei den beiden Bandpaaren unterschiedliche Transportgeschwindigkeiten in Transportrichtung einstellen lassen.

Die unterschiedlichen Transportgeschwindigkeiten in Transportrichtung ermöglichen das Einstellen des Abstands der Würstchen während des Transports.

Die Erfindung löst die Aufgabe in einem weiteren Aspekt mit einem System zur Verarbeitung von pastöser Lebensmittelmasse, dadurch gekennzeichnet, dass das System eine Transport-Vorrichtung nach Anspruch 6 sowie eine Füllmaschine und mindestens eine Lebensmittel-Behandlungseinrichtung aufweist, vorzugsweise eine Abdreheinrichtung, eine Trenneinrichtung und/oder eine oder mehrere Ausrichtvorrichtung (en) zum Ausrichten einzelner Würstchen. Erfindungsgemäß ist eine Lebensmittel-Behandlungseinrichtung eine - an sich bekannte - Einrichtung oder Maschine zum Weiterverarbeiten und Behandeln von Lebensmittel, insbesondere Lebensmittelportionen wie Würstchen. Hierbei kann es sich um eine Abdreheinrichtung, einen sogenannten Crimper, eine Trenneinrichtung zum Herstellen von separaten Würstchen aus einer zuvor zusammenhängenden Würstchen-Kette oder auch eine Ausrichtvorrichtung zum Ausrichten von Würstchen handeln.

Die Erfindung löst die Aufgabe in einem weiteren Aspekt mit einem Verfahren zum Ausschleusen von Würstchen, bei dem sich die Würstchen im Eingriff von parallel verlaufenden Transportbändern befinden, sodass die Würstchen in vorzugsweise definierter Position in eine bestimmte Transportrichtung transportiert werden können, dadurch, dass der Abstand der parallel verlaufenden Transportbänder abschnittsweise oder wenigstens partiell so verändert werden kann, dass die Würstchen sich nicht mehr im Eingriff der Transportbänder befinden und aus dem Transportbereich ausgeschleust werden, wobei die Ausschleus-Vorrichtung mit einer Steuerung verbunden ist, welche mit einer Sensoreinrichtung zur Detektion eines Merkmals der Lebensmittelportion, insbesondere ein Formmerkmal, verbunden ist, wobei die Steuerung ein Signal bereitstellt, um die Verstelleinrichtung(en) der Ausschleus-Vorrichtung zu steuern.

Gemäß einer Weiterbildung des Verfahrens durchlaufen die Würstchen mindestens zwei Bandpaare, wobei eine Differenz in der Transportgeschwindigkeit zwischen den Bandpaaren besteht, sodass aufgrund der Übersetzung zwischen den Bandpaaren die Lücke zwischen den Würstchen eingestellt werden kann.

Gemäß einer weiteren Weiterbildung des Verfahrens wird die Ausschleusung von Würstchen in der Ausschleus-Vorrichtung durch die Unterstützungseinrichtung, vorzugsweise per Luftdruck, unterstützt.

Das erfindungsgemäße Verfahren wird vorzugsweise mit einer zuvor beschriebenen erfindungsgemäßen Ausschleus- Vorrichtung und deren bevorzugten Merkmalen ausgeführt, deren Wirkungsweise und Vorteile entsprechend für das Verfahren zur Anwendung kommen; insoweit wird auf die Offenbarung der erfindungsgemäßen Ausschleus-Vorrichtung Bezug genommen und zur Vermeidung von Wiederholungen auf die diesbezüglichen Beschreibungen verwiesen.

Die Erfindung ist nachstehend anhand bevorzugter Ausführungsbeispiele näher erläutert. Hierbei zeigen:
- Fig.1: ein System aufweisend mehrere Maschinen sowie eine erfindungsgemäße Ausschleus-Vorrichtung und Transport-Vorrichtung in einer perspektivischen Ansicht
- Fig.2: einen vergrößerten Ausschnitt des in Fig.1 gezeigten Systems mit der Ausschleus-Vorrichtung
- Fig.3: die Transport-Vorrichtung aufweisend die Ausschleus-Vorrichtung in einer Draufsicht
- Fig.4: einen vergrößerten Ausschnitt der Ausschleus-Vorrichtung aus Fig.3
- Fig.5: Teile des Systems und die Ausschleus-Vorrichtung mit einem abschnittsweise vergrößerten Abstand zwischen zwei Transportbändern in einer perspektivischen Ansicht
- Fig.6: Teile des Systems und die Ausschleus-Vorrichtung mit einem abschnittsweise vergrößerten Abstand zwischen zwei Transportbändern, wobei eines der Würstchen außer Eingriff der Transportbänder ist und nach unten fällt, in einer perspektivischen Ansicht
- Fig.7: Teile des Systems und die Ausschleus-Vorrichtung mit einem abschnittsweise vergrößerten Abstand zwischen zwei Transportbändern, wobei ein zweites Würstchen außer Eingriff der Transportbänder ist und nach unten fällt, in einer perspektivischen Ansicht
- Fig.8: Teile des Systems und die Ausschleus-Vorrichtung mit einem abschnittsweise vergrößerten Abstand zwischen zwei Transportbändern nahe dem Übergang der Ausschleusvorrichtung zu einem nachfolgenden Bandpaar in einer Draufsicht
- Fig.9: Teile des Systems und die Ausschleus-Vorrichtung mit einem abschnittsweise vergrößerten Abstand zwischen zwei Transportbändern nahe dem Übergang von einer in Transportrichtung zunächst kommenden Verarbeitungsstation des Systems zur Ausschleus-Vorrichtung in einer Draufsicht
- Fig.10: Teile des Systems und die Ausschleus-Vorrichtung mit einem senkrecht wirkenden Eingriff der Transportbänder mit den Würstchen

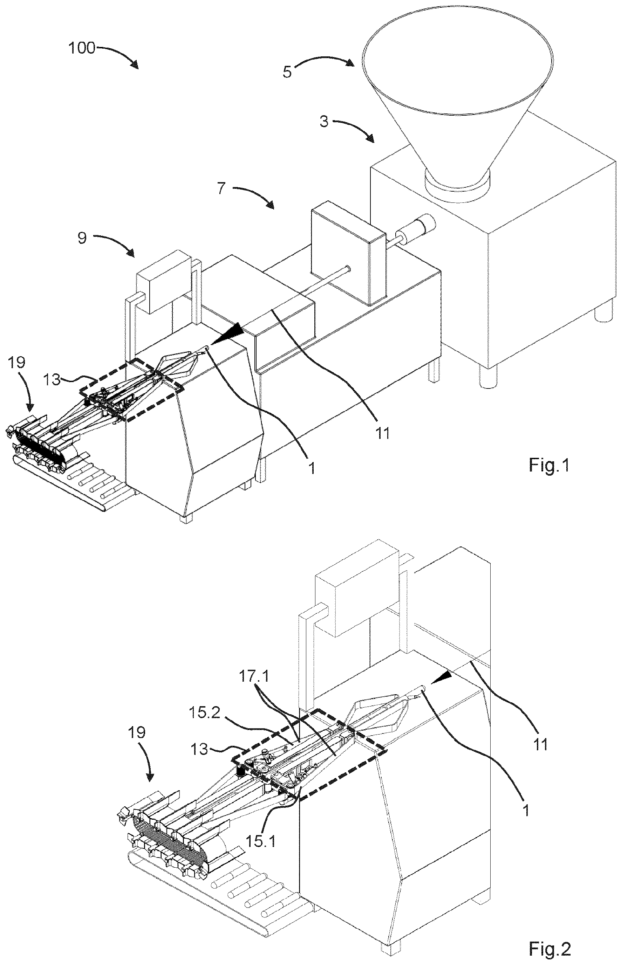

Das in Fig.1 gezeigte System 100 dient zur Herstellung von Lebensmittelportionen, insbesondere länglichen Würstchen 1. Das System 100 weist eine Füllmaschine 3 mit Fülltrichter 5 zum Aufnehmen einer pastösen Lebensmittelmasse wie Wurstbrät zum Einfüllen des Wurstbräts in einen Darm, insbesondere Naturdarm, auf. Weiterhin weist das System 100 mindestens eine weitere Lebensmittel-Behandlungseinrichtung auf, insbesondere bevorzugt eine Abdreheinrichtung 7 zum Abdrehen und damit Herstellen von Abdrehstellen zwischen einzelnen Würstchen 1 und damit Lebensmittelportionen und eine Trenneinrichtung 9 zum Herstellen vereinzelter Würstchen 1 auf. Füllmaschine 3, Abdreheinrichtung 7 und Trenneinrichtung 9 können je nach Anwendung ausgewählt und zusammengestellt werden.

Anschließend an die Trenneinrichtung 9 weist das System 100 in Transportrichtung 11 eine erfindungsgemäße Ausschleus-Vorrichtung 13 zum Ausschleusen von Würstchen 1 auf, mittels derer das erfindungsgemäße Verfahren ausgeführt werden kann. Weiterhin kann das System 100 mit einer oder mehreren sich anschließenden Ausrichtvorrichtung(en) 19 kombiniert werden.

Die Ausschleus-Vorrichtung 13 zum Ausschleusen von Würstchen 1 ist zusätzlich in einem vergrößerten Ausschnitt in Fig.2 dargestellt und weist die Transportbänder 15.1 und 15.2, welche ein Bandpaar 17.1 bilden, auf.

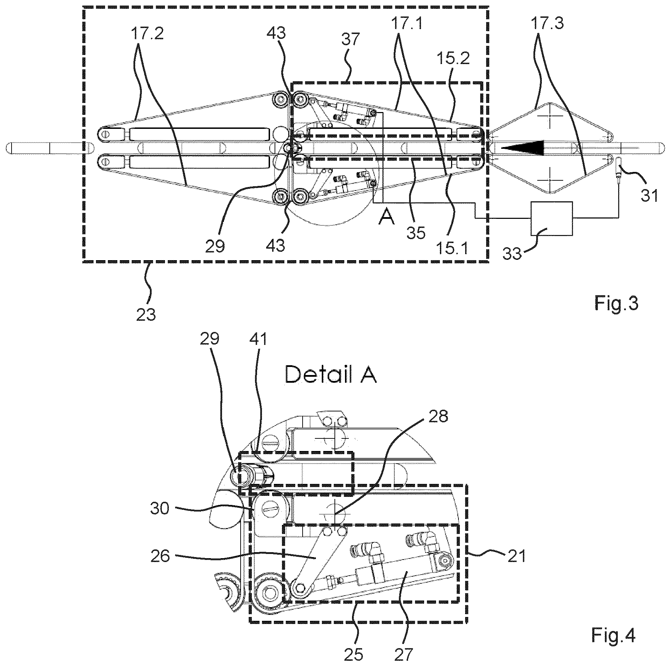

In dem in Fig.3 gezeigten Ausführungsbeispiel sind die Komponenten der Transport-Vorrichtung 23 mit der Ausschleus-Vorrichtung 13 zu sehen. Die Würstchen werden zwischen den Transportbändern 15.1 und 15.2 bzw. dem Bandpaar 17.1 sowie den Bandpaaren 17.2 und 17.3 transportiert, wobei in der Ausschleus-Vorrichtung 13 ein Transportbereich 35 durchlaufen wird. Hat im Betrieb ein Abschnitt des Transportbandes 15.1 oder 15.2 den Transportbereich 35 durchlaufen, wird ersterer in einem Rücklaufbereich 37 wieder zur Anfangsposition des Transportbereichs zurückgeführt. Für eine stufenweise Einstellung der Transportgeschwindigkeit sind das Bandpaar 17.1 der Ausschleus-Vorrichtung 13 und das in Transportrichtung 11 nachfolgende Bandpaar 17.2 vorzugsweise über ein Getriebe 43 miteinander verbunden.

Weiterhin weist die Transport-Vorrichtung 23 eine Sensoreinrichtung 31 auf, die mit einer Steuerung 33 verbunden ist, welche wiederum mit den Verstelleinrichtungen 21, welche detailliert zu sehen sind in Fig.4, verbunden ist, um diese zu steuern. Die Steuerung 33 ist mittels elektrischer Leitungen oder auch kabellos mit der Sensoreinrichtung 31 verbunden, welche ausgebildet ist zur Detektion eines Merkmals der Lebensmittelportion und weiterhin ausgebildet ist, der Steuerung ein Signal bereitzustellen, um die Verstelleinrichtung(en) der Ausschleus-Vorrichtung zu steuern. Die Steuerung 33 kann alternativ in nicht weiter dargestellter Weise eine separate Steuerung nur für die Ausschleus-Vorrichtung 13 sein oder die Steuerung beispielsweise der Füllmaschine 3 oder die Steuerung einer weiteren Lebensmittel-Behandlungseinrichtung sein, beispielsweise der Abdreheinrichtung 7 oder der Trenneinrichtung 9. Verschiedene Sensoreinrichtungen können zum Einsatz kommen, um bestimmte Merkmale oder Fehler von Würstchen erkennen zu können. Auch können mehrere Sensoreinrichtungen oder mehrere Sensoren zum Einsatz kommen. Beispielsweise kann die - mindestens eine - Sensoreinrichtung 31 als Lichtsensor, als Infrarot-Lichtsensor oder als bildgebender Sensor ausgebildet sein.

Wie das Ausführungsbeispiel in Fig.4 zeigt, weisen die Verstelleinrichtungen 21 vorzugsweise Pneumatikeinheiten 25 auf, durch die eine partielle Veränderung des Abstandes der Transportbänder in der Ausschleus-Vorrichtung 13 erreicht werden kann. Die Pneumatikeinheiten 25 weisen pneumatische Zylinder 27 auf, die jeweils an der Spitze gelenkig mit einem Ende eines Hebels 26 verbunden sind. Der Hebel 26 kann um die Drehachse 28 gedreht werden. An dem anderen Ende des Hebels 26 ist eine Umlenkrolle 30 befestigt, über die eine Umlenkung eines Transportbandes 15 erfolgt. Empfangen die Verstelleinrichtungen 21 ein Ausschleussignal von der Steuerung 33, fahren die pneumatischen Zylinder 27 ein, sodass sich der Hebel 26 um die Drehachse 28 dreht und sich die Umlenkrolle 30 in die Verstellrichtung 39.1 oder 39.2 bewegt. Folglich vergrößert sich der Abstand zwischen den Transportbändern 15.1 und 15.2 des betreffenden Bandpaares 17.1 lokal. Die Ausschleus-Vorrichtung 13 befindet sich somit in Ausschleusstellung. Durch die Unterstützungseinrichtung 29, hier in Form einer Luftblasdüse, wird der Ausschleusvorgang der Würstchen 1 im Ausschleusbereich 41 zusätzlich unterstützt.

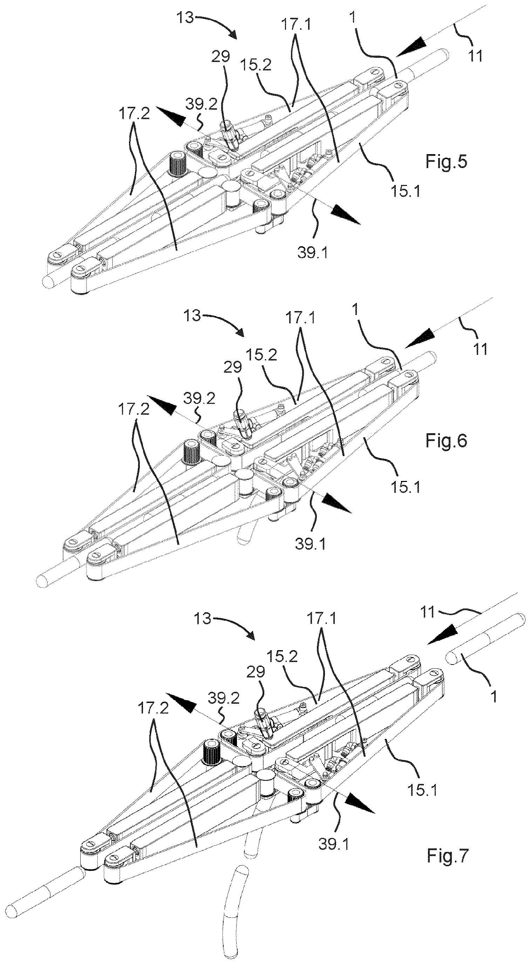

Nochmals verdeutlicht wird die mittels der Ausschleus-Vorrichtung 13 zu erreichende Ausschleusung in Fig. 5 bis Fig.7. Fig.5 zeigt ein Ausführungsbeispiel, bei dem nach Erzeugung eines Ausschleussignals der Abstand zwischen den Transportbändern 15.1 und 15.2 des Bandpaares 17.1 durch Bewegung in die Verstellrichtungen 39.1 und 39.2 lokal vergrößert wurde. Durch die Vergrößerung des Abstandes gelangen sämtliche auszusortierende Würstchen 1 außer Eingriff der Transportbänder 15.1 und 15.2 und fallen nach unten, gezeigt in Fig.6 und Fig.7. Durch die Unterstützungseinrichtung 29 wird zusätzlicher, nach unten wirkender Druck auf auszuschleusende Würstchen 1 ausgeübt, wodurch die Ausschleusung unterstützt wird.

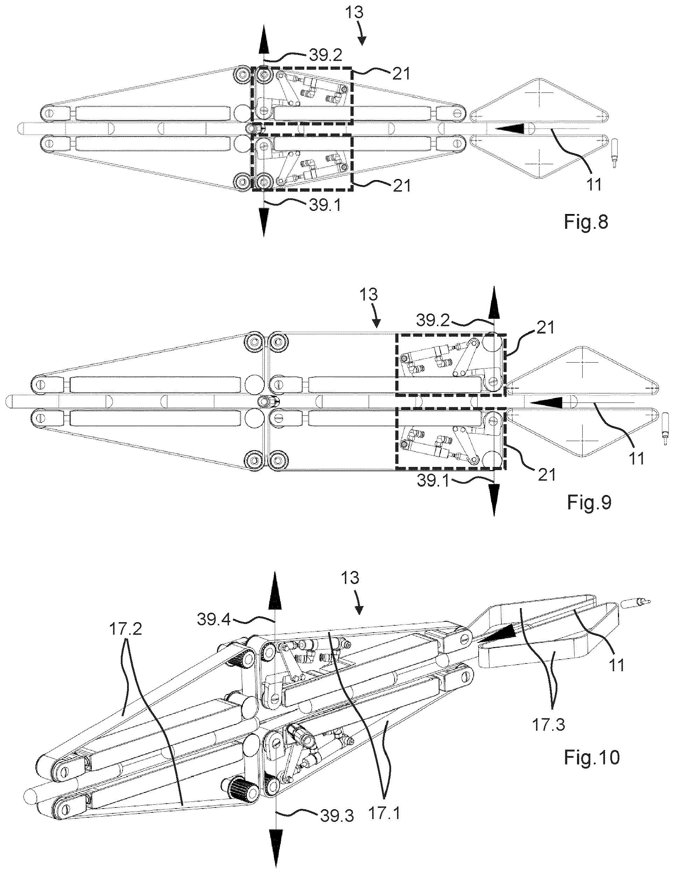

In Fig. 8 bis Fig.10 werden weitere verschiedene Ausführungsbeispiele der Ausschleus-Vorrichtung 13 gezeigt. Das Ausführungsbeispiel gemäß Fig.8 entspricht dem in den vorstehenden Figuren gezeigten Ausführungsbeispiel der Ausschleus-Vorrichtung 13, bei dem die Verstelleinrichtungen 21 nahe dem Übergang zum in Transportrichtung 11 nachfolgenden Bandpaar 17.2 angeordnet sind, sodass die partielle Veränderung des Abstandes der Transportbänder 15.1 und 15.2 in diesem Bereich erfolgen kann. Bei dem Ausführungsbeispiel gemäß Fig.9 sind hingegen die Verstelleinrichtungen 21 nahe dem Übergang von einer in Transportrichtung 11 zunächst kommenden Verarbeitungsstation des Systems 100 zur Ausschleus-Vorrichtung 13 angeordnet, sodass in diesem Bereich der Abstand der Transportbänder variiert werden kann. Somit können bereits in diesem Bereich Würstchen 1 ausgeschleust werden. Die Ausschleus-Vorrichtung 13 bzw. das zugehörige Verfahren zur Ausschleusung fehlerhafter Würstchen kann also gemäß verschiedener Ausführungsbeispiele so ausgebildet sein, dass die Ausschleusung im vorderen Bereich, wo die Würstchen zugeführt werden, in einem hinteren Bereich, wo die Würstchen wieder abgegeben werden sollen oder in einem mittleren Bereich erfolgt.

Die in den Fig.1 bis Fig.9 gezeigten Ausführungsbeispiele zeigen Ausschleus-Vorrichtungen 13, bei denen die Eingriffswirkung mit den Würstchen 1 horizontal erfolgt. Ein Ausführungsbeispiel mit einem senkrecht wirkenden Eingriff und den Verstellrichtungen 39.3 und 39.4 ist in Fig.10 gezeigt. Dabei entspricht der Aufbau der Transport-Vorrichtung 23 dem in Fig.8 und Fig.9 gezeigten Ausführungsbeispiel mit der Ausnahme, dass die Ausschleus-Vorrichtung 13 und das in Transportrichtung 11 nachfolgende Bandpaar 17.2 um 90° gedreht sind.

### Bezugszeichenliste

- 100: System
- 1: Würstchen
- 3: Füllmaschine
- 5: Fülltricher
- 7: Abdreheinrichtung
- 9: Trenneinrichtung
- 11: Transportrichtung
- 13: Ausschleus-Vorrichtung
- 15.1: Erstes Transportband der Ausschleus-Vorrichtung
- 15.2: Zweites Transportband der Ausschleus-Vorrichtung
- 17.1: Bandpaar der Ausschleusvorrichtung
- 17.2: Auf die Ausschleus-Vorrichtung in Transportrichtung folgendes Bandpaar
- 17.3: Vor der Ausschleus-Vorrichtung in Transportrichtung kommendes Bandpaar
- 19: Ausrichtvorrichtung
- 21: Verstelleinrichtung
- 23: Transport-Vorrichtung
- 25: Pneumatikeinheit
- 26: Hebel
- 27: Pneumatischer Zylinder
- 28: Drehachse
- 29: Unterstützungseinrichtung (Luftblas-Düse)
- 30: Umlenkrolle
- 31: Sensoreinrichtung
- 33: Steuerung
- 35: Transportbereich
- 37: Rücklaufbereich
- 39.1: Erste Verstellrichtung
- 39.2: Zweite Verstellrichtung
- 39.3: Dritte Verstellrichtung
- 39.4: Vierte Verstellrichtung
- 41: Ausschleusbereich
- 43: Getriebe

## Patentansprüche

1. Ausschleus-Vorrichtung (13) für Lebensmittelportionen, insbesondere Würstchen (1), mit zwei beabstandet zueinander angeordneten, mittels mindestens eines Antriebs antreibbaren umlaufenden Transportbändern (15.1,15.2) die ein Bandpaar (17.1) bilden und einen Transportbereich (35) aufweisen, welcher im Betrieb in eine Transportrichtung (11) bewegt wird, und einen Rücklaufbereich (37), wobei eine Lebensmittelportion im Transportbereich (35) zwischen den beiden Transportbändern (15.1,15.2) in einer Transportstellung in Eingriff von diesen ist und in Transportrichtung (11) transportiert werden kann, **dadurch gekennzeichnet, dass** die Ausschleus-Vorrichtung (13) mindestens eine Verstelleinrichtung (21) zum Ausschleusen einer Lebensmittelportion in einem Ausschleusbereich (41) aufweist, die so ausgebildet ist, dass der Abstand der Transportbänder (15.1,15.2) voneinander im Transportbereich (35) mindestens partiell so variiert werden kann, dass (mindestens) eine Lebensmittelportion in der Transportstellung in Eingriff der (15.1,15.2) ist und der Abstand in einer Ausschleusstellung so vergrößert ist, dass eine Lebensmittelportion so außer Eingriff der Transportbänder (15.1,15.2) kommt, dass sie ausgeschleust werden kann, und dass die Ausschleus-Vorrichtung (13) mit einer Steuerung (33) verbunden ist, welche mit einer Sensoreinrichtung (31) zur Detektion eines Merkmals der Lebensmittelportion, insbesondere ein Formmerkmal, verbunden ist, wobei die Steuerung (33) ein Signal bereitstellt, um die Verstelleinrichtung(en) (21) der Ausschleus-Vorrichtung zu steuern.

2. Ausschleus-Vorrichtung (13) nach Anspruch 1, **dadurch gekennzeichnet,**
**dass** die Ausschleus-Vorrichtung (13) mindestens eine Verstelleinrichtung (21) aufweist, die eine Pneumatikeinheit (25) ist oder aufweist.

3. Ausschleus-Vorrichtung (13) nach Anspruch 2, **dadurch gekennzeichnet,**
**dass** jede Pneumatikeinheit (25) einen pneumatischen Zylinder (27) aufweist.

4. Ausschleus-Vorrichtung (13) nach Anspruch 2 oder 3, **dadurch gekennzeichnet,**
**dass** eine Pneumatikeinheit (25), besonders bevorzugt jede Pneumatikeinheit (25) mit einem pneumatischen Zylinder (27), mindestens einem Transportband (15.1,15.2) zugeordnet ist und dazu eingerichtet ist, den Abstand des Transportbands (15.1,15.2) im Transportbereich (35) mindestens abschnittsweise von dem gegenüberliegenden Transportband (15.1) oder (15.2) zu vergrößern bzw. zu verkleinern.

5. Ausschleus-Vorrichtung (13) nach einem der Ansprüche 1 bis 4, **dadurch gekennzeichnet,**
**dass** die Ausschleus-Vorrichtung (13) im Ausschleusbereich (41) zusätzlich eine Unterstützungseinrichtung (29) aufweist, vorzugsweise eine Luftblasdüse oder eine mechanische Betätigungseinrichtung, die so angeordnet und ausgebildet ist, dass eine zusätzliche, die Ausschleusung unterstützende Kraft auf die Lebensmittelportion aufgebracht werden kann.

6. Transport-Vorrichtung (23) zum Transportieren von Lebensmittelportionen, **dadurch gekennzeichnet,**
**dass** die Transport-Vorrichtung (23) eine Ausschleus-Vorrichtung (13) nach einem der vorstehenden Ansprüche 1 bis 6 sowie mindestens ein weiteres Bandpaar (17.2) aufweist, das mittels eines Getriebes (43), vorzugsweise eines Riemengetriebes, so mit dem Bandpaar (17.1) der Ausschleus-Vorrichtung (13) gekoppelt ist, dass sich bei den beiden Bandpaaren (17.1) und (17.2) unterschiedliche Transportgeschwindigkeiten in Transportrichtung einstellen lassen.

7. System (100) zur Verarbeitung von pastöser Lebensmittelmasse, **dadurch gekennzeichnet,**
**dass** das System (100) eine Transport-Vorrichtung (23) nach Anspruch 6 sowie eine Füllmaschine (3) und mindestens eine Lebensmittel-Behandlungseinrichtung aufweist, vorzugsweise eine Abdreheinrichtung (7), eine Trenneinrichtung (9) und/oder eine oder mehrere Ausrichtvorrichtung(en) (19).

8. Verfahren zum Ausschleusen von Lebensmittelportionen, bei dem sich die Lebensmittelportionen im Eingriff von parallel verlaufenden Transportbändern (15.1,15.2) befinden, sodass die Lebensmittelportionen in vorzugsweise definierter Position in eine bestimmte Transportrichtung (11) transportiert werden können, **dadurch gekennzeichnet, dass** der Abstand der parallel verlaufenden Transportbänder (15.1,15.2) abschnittsweise oder wenigstens partiell so verändert werden kann, dass die Lebensmittelportionen sich nicht mehr im Eingriff der Transportbänder (15) befinden und aus dem Transportbereich (35) ausgeschleust werden, wobei die Ausschleus-Vorrichtung (13) mit einer Steuerung (33) verbunden ist, welche mit einer Sensoreinrichtung (31) zur Detektion eines Merkmals der Lebensmittelportion, insbesondere ein Formmerkmal, verbunden ist, wobei die Steuerung (33) ein Signal bereitstellt, um die Verstelleinrichtung(en) (21) der Ausschleus-Vorrichtung zu steuern.

9. Verfahren nach Anspruch 8, **dadurch gekennzeichnet,**
**dass** die Lebensmittelportionen mindestens zwei Bandpaare (17.1,17.2) durchlaufen, wobei eine Differenz in der Transportgeschwindigkeit zwischen den Bandpaaren (17.1,17.2) besteht, sodass aufgrund der Übersetzung zwischen den Bandpaaren (17.1,17.2) die Lücke zwischen den Lebensmittelportionen eingestellt werden kann.

10. Verfahren nach Anspruch 8 oder 9, **dadurch gekennzeichnet,**
**dass** die Ausschleusung von Lebensmittelportionen in der Ausschleus-Vorrichtung (13) durch die Unterstützungseinrichtung (29), vorzugsweise per Luftdruck, unterstützt wird.

## Claims

1. An ejector device (13) for food portions, in particular for sausages (1), comprising two circulating and spaced-apart conveyor belts (15.1, 15.2) which can be driven by means of at least one drive means, and which form a belt pair (17.1) and have a conveying area (35) which in operation is moved in a conveying direction (11), and a return area (37), wherein a food portion in the conveying area (35) between the two conveyor belts (15.1, 15.2) is engaged by the latter in a conveying mode and can be conveyed in the conveying direction (11),
**characterized in that**
the ejector device (13) has at least one adjustment mechanism (21) for ejecting a food portion in an ejection area (41), which is so designed that the distance of the conveyor belts (15.1, 15.2) from each other in the conveying area (35) can be varied at least partially, in such a way that (at least) one food portion is engaged by the conveyor belts (15.1, 15.2) in the conveying mode and that said distance is increased in an ejection mode in such a way that a food portion is taken out of engagement with the conveyor belts (15.1, 15.2) in such a way that it can be ejected,
and **in that** the ejector device (13) is connected to a controller (33) which is connected to a sensor unit (31) for detecting a feature of the food portion, in particular a shape feature, wherein the controller (33) provides a signal to control the adjustment mechanism(s) (21) of the ejector device.

2. The ejector device (13) according to claim 1, **characterized in that** the ejector device (13) has at least one adjustment mechanism (21) that is or has a pneumatic unit (25).

3. The ejector device (13) according to claim 2, **characterized in that** each pneumatic unit (25) has a pneumatic cylinder (27).

4. The ejector device (13) according to claim 2 or 3, **characterized in that** a pneumatic unit (25), particularly preferably each pneumatic unit (25) having a pneumatic cylinder (27), is assigned to at least one conveyor belt (15.1 , 15.2) and is configured to increase or reduce the distance of said conveyor belt (15.1, 15.2), at least in sections thereof, from the opposite conveyor belt (15.1) or (15.2) in the conveying area (35).

5. The ejector device (13) according to any one of claim 1 to claim 4, **characterized in that** the ejector device (13) additionally includes a supporting device (29) in the ejection area (41), preferably an air jet nozzle or a mechanical actuating means, which is arranged and configured in such a way that an additional force supporting ejection can be applied to the food portion.

6. A conveyor device (23) for conveying food portions, **characterized in that** the conveyor device (23) has an ejector device (13) according to any of the preceding claims 1 to 6 and at least one further belt pair (17.2) coupled by means of a transmission gear (43), preferably a belt drive, to the belt pair (17.1) of the ejector device (13) in such a way that different conveying speeds in the conveying direction can be set for the two pairs of belts (17.1) and (17.2).

7. System (100) for processing a pasty food mass, **characterized in that** the system (100) has a conveyor device (23) according to claim 6 and a staffing machine (3) and at least one food treatment device, preferably a twist linking device (7), a separating device (9) and/or one or more alignments device(s) (19).

8. A method for ejecting food portions in which the food portions are engaged by a parallel conveyor belts (15.1, 15.2), such that the food portions can be conveyed in a preferably defined position in a particular conveying direction (11),
**characterized in that**
the distance between the parallel conveyor belts (15.1, 15.2) can be changed in sections or at least partially in such a way the food portions are no longer engaged by the conveyor belts and can be ejected from the conveying area (35), wherein the ejector device (13) is connected with a controller (33), which is connected to a sensor unit (31) for detecting a feature of the food portion, in particular a shape feature, wherein the controller (33) provides a signal to control the adjustments mechanism(s) (21) of the ejector device.

9. Method according to claim 8, **characterized in that**
The food portions pass through at least two pairs of belts (17.1, 17.2), with a difference in the conveying speed between the pairs of belts (17.1, 17.2), such that the gap between the food portions can be adjusted on the basis of the transmission ratio between the pairs of belts (17.1, 17.2).

10. Method according to claim 8 or 9, **characterized in that** the ejection of food portions in the ejector device (13) is supported by the supporting device (29), preferably by air pressure.

## Revendications

1. Dispositif d'évacuation (13) pour des portions de produit alimentaire, en particulier des saucisses (1), avec deux bandes transporteuses (15.1, 15.2) rotatives disposées à distance l'une par rapport à l'autre, pouvant être entraînées au moyen d'au moins un entraînement, qui forment une paire de bandes (17.1) et présentent une zone de transport (35), laquelle se déplace dans une direction de transport (11) en fonctionnement, et une zone de retour (37), dans lequel une portion de produit alimentaire dans la zone de transport (35) entre les deux bandes transporteuses (15.1, 15.2) est en prise avec celles-ci dans une position de transport et peut être transportée dans la direction de transport (11),
**caractérisé en ce**
**que** le dispositif d'évacuation (13) présente au moins un système d'ajustement (21) destiné à évacuer une portion de produit alimentaire dans une zone d'évacuation (41), qui est réalisée de telle sorte que la distance des bandes transporteuses (15.1, 15.2) l'une de l'autre peut varier au moins en partie dans la zone de transport (35) de telle sorte qu'(au moins) une portion de produit alimentaire est en prise dans la position de transport avec les bandes transporteuses (15.1, 15.2) et la distance dans une position d'évacuation peut être agrandie de telle sorte qu'une portion de produit alimentaire se dégage des bandes transporteuses (15.1, 15.2) de telle sorte qu'elle peut être évacuée,
et **que** le dispositif d'évacuation (13) est relié à une commande (33), laquelle est reliée à un système de capteur (31) destiné à détecter une caractéristique de la portion de produit alimentaire, en particulier une caractéristique de forme, dans lequel la commande (33) fournit un signal pour commander le/les système(s) d'ajustement (21) du dispositif d'évacuation.

2. Dispositif d'évacuation (13) selon la revendication 1, **caractérisé en ce**
**que** le dispositif d'évacuation (13) présente au moins un système d'ajustement (21), qui est ou présente une unité pneumatique (25).

3. Dispositif d'évacuation (13) selon la revendication 2, **caractérisé en ce que**
chaque unité pneumatique (25) présente un vérin pneumatique (27).

4. Dispositif d'évacuation (13) selon la revendication 2 ou 3, **caractérisé en ce qu'**une unité pneumatique (25), de manière particulièrement préférée chaque unité pneumatique (25) avec un vérin pneumatique (27), est associée à au moins une bande transporteuse (15.1, 15.2) et est mise au point pour agrandir ou réduire la distance de la bande transporteuse (15.1, 15.2) dans la zone de transport (35) au moins par endroits de la bande transporteuse (15.1) ou (15.2) opposée.

5. Dispositif d'évacuation (13) selon l'une quelconque des revendications 1 à 4, **caractérisé en ce**
**que** le dispositif d'évacuation (13) présente, dans la zone d'évacuation (41), en supplément un système de soutien (29), de préférence une buse de soufflage d'air ou un système d'actionnement mécanique, qui est disposé(e) et réalisé(e) de telle sorte qu'une force supplémentaire soutenant l'évacuation peut être appliquée sur la portion de produit alimentaire.

6. Dispositif de transport (23) destiné à transporter des portions de produit alimentaire, **caractérisé en ce**
**que** le dispositif de transport (23) présente un dispositif d'évacuation (13) selon l'une quelconque des revendications précédentes 1 à 6 ainsi qu'au moins une autre paire de bandes (17.2), qui est couplée au moyen d'une transmission (43), de préférence d'une transmission à courroie, à la paire de bandes (17.1) du dispositif d'évacuation (13) de telle sorte que différentes vitesses de transport peuvent être réglées dans la direction de transport pour les deux paires de bandes (17.1) et (17.2).

7. Système (100) de traitement de masse alimentaire pâteuse, **caractérisé en ce**
**que** le système (100) présente un dispositif de transport (23) selon la revendication 6 ainsi qu'une machine de remplissage (3) et au moins un système de traitement de produit alimentaire, de préférence un système de torsion (7), un système de séparation (9) et/ou un ou plusieurs dispositifs d'orientation (19).

8. Procédé d'évacuation de portions de produit alimentaire, où les portions de produit alimentaire sont en prise avec des bandes transporteuses (15.1, 15.2) s'étendant de manière parallèle si bien que les portions de produit alimentaire peuvent être transportées dans une direction de transport (11) donnée dans une position de préférence définie,
caractérisé en ce
la distance des bandes transporteuses (15.1, 15.2) s'étendant de manière parallèle peut être modifiée par endroits ou au moins en partie de telle sorte que les portions de produit alimentaire ne sont plus en prise avec les bandes transporteuses (15) et sont évacuées hors de la zone de transport (35), dans lequel
le dispositif d'évacuation (13) est relié à une commande (33), laquelle est reliée à un système de capteur (31) destiné à la détection d'une caractéristique de la portion de produit alimentaire, en particulier une caractéristique de forme, dans lequel la commande (33) fournit un signal pour commander le/les système(s) d'ajustement (21) du dispositif d'évacuation.

9. Procédé selon la revendication 8, **caractérisé en ce**
**que** les portions de produit alimentaire traversent au moins deux paires de bandes (17.1, 17.2),
dans lequel une différence dans la vitesse de transport entre les paires de bandes (17.1, 17.2) existe si bien que, en raison de la translation entre les paires de bandes (17.1, 17.2), l'interstice entre les portions de produits alimentaires peut être réglé.

10. Procédé selon la revendication 8 ou 9, **caractérisé en ce**
**que** l'évacuation de portions de produits alimentaires est soutenue dans le dispositif d'évacuation (13) par le système de soutien (29), de préférence par pression d'air.
